# FASCICULE DE BREVET EUROPEEN

(11) **EP 1 344 195 B1**
(45) Date de publication et mention de la délivrance du brevet: **19.05.2004**
(21) Numéro de dépôt: 01272200.5
(22) Date de dépôt: 19.12.2001
(51) Int. Cl.: G07F 7/10

(54) **METHODE DE CONTROLE D'APPARIEMENT**
ÜBEREINSTIMMUNGSSTEUERVERFAHREN
MATCH CONTROL METHOD

(30) Priorité: 22.12.2000 CH 25192000
(43) Date de publication de la demande: 17.09.2003
(73) Titulaire: Nagravision SA, 1033 Cheseaux-sur-Lausanne (CH)
(72) Inventeur: JAQUIER, Jean-Luc, CH-1093 La Conversion (CH); SASSELLI, Marco, CH-1803 Chardonne (CH)
(74) Mandataire: Wenger, Joel-Théophile
(86) Numéro de dépôt international: PCT/IB2001/002603
(87) Numéro de publication internationale: WO 2002/052515

(56) Documents cités:
- EP-A- 0 448 369
- EP-A- 0 530 601
- EP-A- 0 663 650
- EP-A- 0 707 290
- EP-A- 0 997 853
- WO-A-93/07715
- WO-A-99/01848
- WO-A-99/25140
- US-A- 5 036 461

## Description

La présente invention concerne une méthode de contrôle de transfert sécurisé d'informations entre une unité d'utilisateur et un module de sécurité, en particulier lors de l'interaction de ce module de sécurité avec plusieurs unités d'utilisateurs.

Ces unités d'utilisateur sont connectées à un ou des réseaux proposant des produits ou services.

Ces produits ou services étant à accès conditionnel, l'utilisation de ces produits est soumise à un payement sous forme quelconque, par exemple par abonnement ou achat spécifique.

Ces unités d'utilisateur se présentent sous plusieurs formes, par exemple un décodeur de télévision à péage, un ordinateur voire un téléphone portable, un "palm-top", un PDA, une radio, une télévision une borne multimédia, un distributeur de billet.

Par produit ou service, on entend non seulement un film, une retransmission sportive, de la musique, un programme informatique, un jeu, des informations boursières ou des actualités mais également un service tel que l'accès et l'utilisation d'un réseau, l'identification ou le payement électronique. Ce produit ou services est accessible sur un réseau sur lequel les utilisateurs peuvent se connecter et utilise des moyens d'encryptage pour l'aspect sécurité.

Pour gérer les autorisations d'utilisation de ces produits ou services, l'unité d'utilisateur comprend des moyens de sécurité placés dans un module de sécurité.

Ce module de sécurité se présente généralement sous la forme d'une carte à puce, de la forme d'une carte de crédit ou d'une puce, voire d'une SIM, comprenant un crypto-processeur (USIM, WIM). Cette carte permet de fournir les informations nécessaires pour autoriser l'utilisation du produit par l'intermédiaire des opérations de décryptage utilisant des clés stockées dans la mémoire du crypto-processeur réputée inviolable.

Ce module de sécurité est amené à échanger des informations confidentielles avec l'unité d'utilisateur, par exemple lorsqu'il s'agit de transmettre la clé de décryptage du produit dans le cadre de la télévision à péage, cette clé étant décryptée dans le module de sécurité et transmise à l'unité d'utilisateur pour traiter les données.

C'est pourquoi, pour empêcher toutes atteintes à ces données, la voie de communication entre le module de sécurité et l'unité d'utilisateur est encryptée par une clé unique à ces deux éléments dite clé d'appariement. Cette configuration est décrite dans la demande PCT/IB99/00821; (WO-A-9 957 901) dans laquelle la clé unique est initialement dans le décodeur et est ensuite chargée dans le module de sécurité lors d'une phase d'initialisation. Une fois le module de sécurité apparié avec le décodeur, ce module ne peut fonctionner dans aucune autre unité.

Cette solution présente le premier inconvénient d'empêcher toute utilisation du module de sécurité dans un autre décodeur, même si ce décodeur appartient au même utilisateur. Un autre inconvénient de cette méthode est qu'elle n'empêche pas l'utilisation d'une carte clonée qui serait utilisée pour la première fois dans un décodeur quelconque et donc appariée avec ce décodeur.

Le but de la présente invention est de proposer une méthode qui garantit l'encryptage des données échangées entre le module de sécurité et l'unité d'utilisateur tout en palliant aux inconvénients cités ci-dessus.

Ce but est atteint par une méthode d'appariement entre un module de sécurité et une unité d'utilisateur, cette dernière disposant de moyens de communication bidirectionnels avec un centre de gestion, caractérisée en ce qu'elle consiste à :
- détecter par l'unité d'utilisateur si le module de sécurité connecté lui est apparié,
- dans l'affirmative, utiliser une clé unique d'appariement propre au couple unité d'utilisateur / module de sécurité pour encrypter les données échangées,
- dans la négative, requérir auprès du centre de gestion l'autorisation de s'apparier avec ce module de sécurité, requête accompagnée des identifiants de l'unité d'utilisateur et du module de sécurité,
- vérifier par le centre de gestion la conformité de cet appariement et transmettre le résultat à l'unité de l'utilisateur,
- si l'autorisation est donnée, établir une clé d'appariement propre au couple unité d'utilisateur / module de sécurité pour encrypter les données échangées.

Ainsi, le contrôle de l'appariement est effectué de manière dynamique et n'est plus la conséquence de la connexion d'un module de sécurité dans une unité d'utilisateur. Il est géré par le centre de gestion qui décide d'accepter ou de refuser cet appariement. C'est pourquoi la requête est accompagnée des données permettant d'identifier ces deux éléments tels que leurs numéros de série par exemple. Il peut être accompagné de données concernant la localisation de l'unité, données obtenues par d'autres voies, par exemple le numéro d'appel de l'unité ou l'adresse sur son réseau.

Par clé d'appariement, on entend une clé symétrique ou une clé asymétrique, par exemple une clé publique et une clé privée. Dans ce dernier cas, les trois cas suivants peuvent se présenter:
- chaque partie comprend les deux clés publiques et privées. Les communications vers l'autre partie sont encryptées par la clé publique et donc décryptées par la clé privée.
- chaque partie contient l'une des clés publique ou privée. Dans une direction, les données seront encryptées par la clé publique puis décryptées par la clé privée, et dans l'autre direction les données sont encryptées par la clé privée puis décryptées par la clé publique.
- chaque partie contient la clé publique de l'autre partie et sa clé privée.

Les données sont encryptées par la clé publique de l'autre partie et décryptées par sa propre clé privée.

Il est à noter qu'un module de sécurité peut être apparié avec plusieurs unités d'utilisateur. Sa mémoire dispose d'une zone pour stocker un ensemble de clés d'appariement, chaque clé étant associée au numéro d'identification de l'unité d'utilisateur.

Ainsi, lors de chaque connexion d'un tel module dans une unité d'utilisateur, le protocole d'initialisation inclut la reconnaissance mutuelle et l'utilisation de la clé (ou des clés) propre au couple unité d'utilisateur /module de sécurité.

Selon une variante de l'invention, l'unité d'utilisateur peut également disposer d'une zone de clés d'appariement et peut être de ce fait appariée avec plusieurs modules de sécurité.

Cette clé unique peut être générée de plusieurs manières. Elle peut être générée par le centre de gestion et transmise avec l'autorisation d'appariement, bien entendu sous forme encryptée. Cette clé est transmise au module de sécurité en utilisant une encryption établie selon une clé de session selon des procédures connues en soi.

Un autre moyen d'obtenir cette clé propre est de la générer soit dans l'unité d'utilisateur, soit dans le module de sécurité, soit partiellement dans l'un et l'autre de ces éléments, la combinaison formant alors la clé.

Dans une forme de réalisation de la méthode de l'invention, la requête au centre de gestion est accompagnée non seulement des données identifiants le couple unité d'utilisateur / module de sécurité mais également accompagnée par les données comprises dans la zone de mémoire d'appariement c'est-à-dire incluant tous les appariements précédents.

Le centre de gestion peut alors vérifier que ce module de sécurité a bien été apparié aux unités d'utilisateur qu'il a autorisé, et selon l'ordre des requêtes.

Ainsi, si un module de sécurité a été cloné, lorsque ce module cloné va demander à s'apparier avec une unité d'utilisateur, les données transmises au centre de gestion concernant les précédents appariements seront différentes de celles du module d'origine. Le centre de gestion dispose de ce fait de moyens pour identifier les modules clonés.

Dans un premier temps, le centre de gestion va accepter l'appariement de cette carte clonée avec une nouvelle unité d'utilisateur B. Si le clonage d'une carte authentique a été opérée à large échelle, la prochaine carte clonée, ayant le même identifiant, requérant l'appariement avec une nouvelle unité d'utilisateur C, le centre de gestion ne retrouvera pas de trace du précédent appariement avec l'unité d'utilisateur B. Cette indication permettra de détecter une tentative de fraude et réagir en conséquence. De plus, si l'utilisateur de la carte authentique désire l'utiliser avec une nouvelle unité D, les données d'appariement transmises par ce module ne contiendront aucune trace de l'unité C et le centre de gestion refusera l'appariement, voire provoquera le blocage complet de ce module de sécurité.

## Revendications

1. Méthode de contrôle d'appariement entre un module de sécurité et une unité d'utilisateur, cette dernière disposant de moyens de communication bidirectionnels avec un centre de gestion, **caractérisée en ce qu'**elle consiste à :
- détecter par l'unité d'utilisateur si le module de sécurité connecté lui est apparié,
- dans l'affirmative, utiliser une clé d'appariement propre au couple unité d'utilisateur / module de sécurité pour encrypter les données échangées,
- dans la négative, requérir auprès du centre de gestion l'autorisation de s'apparier avec ce module de sécurité, requête accompagnée des identifiants de l'unité d'utilisateur et du module de sécurité,
- vérifier par le centre de gestion la conformité de cet appariement et transmettre le résultat à l'unité de l'utilisateur,
- si l'autorisation est donnée, établir une clé d'appariement propre au couple unité d'utilisateur / module de sécurité pour encrypter les données échangées.

2. Méthode selon la revendication 1, **caractérisée en ce que** la clé d'appariement est soit une clé symétrique, soit une clé asymétrique, soit une paire de clés asymétriques.

3. Méthode selon la revendication 1 ou 2, **caractérisée en ce qu'**elle consiste à stocker dans le module de sécurité, la clé d'appariement avec l'identifiant de l'unité d'utilisateur propre à cette unité.

4. Méthode selon les revendications 1 à 3, **caractérisée en ce qu'**elle consiste à transmettre les données des appariements précédents au centre de gestion, ce dernier vérifie ces données avec l'image des appariements autorisés associés à l'identifiant de ce module de sécurité.

5. Méthode selon les revendications 1 à 4, **caractérisée en ce que** la clé d'appariement est générée dans le centre de gestion et est transmise à l'unité d'utilisateur et au module de sécurité sous forme encryptée.

6. Méthode selon les revendications 1 à 5, **caractérisée en ce que** la clé d'appariement est générée par l'unité d'utilisateur ou le module de sécurité, ou par les deux.

7. Méthode selon l'une des revendications précédentes **caractérisé en ce que** l'unité utilisateur est un téléphone portable et le module de sécurité est une carte SIM.

## Patentansprüche

1. Verfahren der Kontrolle der Paarung zwischen einem Sicherungsmodul und einer Benutzereinheit, wobei letztere über Mittel für eine zweiseitig gerichtete Kommunikation mit einem Verwaltungszentrum verfügt und das Verfahren **dadurch gekennzeichnet ist, dass** es daraus besteht:
- durch die Benutzereinheit zu erkennen, ob der daran angeschlossene Sicherungsmodul mit ihr gepaart ist,
- wenn ja, einen dem Paar aus Benutzereinheit und Sicherungsmodul eigenen, alleinigen Paarungsschlüssel zu verwenden, um die ausgetauschten Daten zu verschlüsseln,
- wenn nein, vom Verwaltungszentrum die Erlaubnis zu verlangen, sich mit diesem Sicherungsmodul zu paaren, wobei dieses Ersuchen von Kennungen für die Benutzereinheit und den Sicherungsmodul begleitet wird,
- durch das Verwaltungszentrum zu überprüfen, ob diese Paarung ordnungsgemäss ist, und das Ergebnis an die Benutzereinheit zu übermitteln,
- wenn die Erlaubnis erteilt wird, einen dem Paar aus Benutzereinheit und Sicherungsmodul eigenen Paarungsschlüssel zu erstellen, um die ausgetauschten Daten zu verschlüsseln.

2. Verfahren gemäss Anspruch 1, **dadurch gekennzeichnet, dass** der Paarungsschlüssel ein symmetrischer Schlüssel, ein asymmetrischer Schlüssel oder ein Paar von asymmetrischen Schlüsseln ist.

3. Verfahren gemäss Anspruch 1 oder 2, **dadurch gekennzeichnet, dass** es darin besteht, im Sicherungsmodul den Paarungsschlüssel zusammen mit der Kennung der Benutzereinheit zu speichern, die dieser Einheit eigen ist.

4. Verfahren gemäss den Ansprüchen 1 bis 3, **dadurch gekennzeichnet, dass** es darin besteht, die Daten früherer Paarungen an das Verwaltungszentrum zu übermitteln, letzeres überprüft diese Daten mit dem Raster genehmigter Paarungen, die mit der Kennung dieses Sicherungsmoduls verbunden sind.

5. Verfahren gemäss den Ansprüchen 1 bis 4, **dadurch gekennzeichnet, dass** der Paarungsschlüssel im Verwaltungszentrum erzeugt und in verschlüsselter Form an die Benutzereinheit und an den Sicherungsmodul übermittelt wird.

6. Verfahren gemäss den Ansprüchen 1 bis 5, **dadurch gekennzeichnet, dass** der Paarungsschlüssel durch die Benutzereinheit oder den Sicherungsmodul oder aber durch beide erzeugt wird.

7. Verfahren nach einem der vorangehenden Ansprüche, **dadurch gekennzeichnet, dass** die Benutzereinheit ein Mobiltelefon und der Sicherungsmodul eine SIM-Karte ist.

## Claims

1. A pairing management method between a security module and a user unit, the latter having bi-directional communication means with an operating center, **characterized in that** it consists in:
- detecting by the user unit if the connected security module is paired with it,
- if it is so, using a unique pairing key specific to the couple user unit/security module to encrypt the exchanged data,
- if it is not so, requesting the operating center the authorization to pair with this security module, this request being accompanied by the identifications of the user unit and the security module,
- verifying by the operating center the conformity of this pairing request and transmitting the result to the user unit,
- if the authorization is given, establishing a paring key unique to the couple user unit/security module to encrypt the exchanged data.

2. A method according to Claim 1, **characterized in that** the pairing key is either a symmetrical key, or an asymmetrical key, or a pair of asymmetrical keys.

3. A method according to Claim 1 or 2, **characterized in that** it consists in storing in the security module the pairing key with the identification of the user unit.

4. A method according to Claims 1 to 3, **characterized in that** it consists in transmitting the data of the previous pairings to the operating center, the latter verifying these data with the image of authorized pairings associated with the user identification of this security module.

5. A method according to Claims 1 to 4, **characterized in that** the pairing key is generated in the operating center and is transmitted to the user unit and to the security module in encrypted form.

6. A method according to Claims 1 to 5, **characterized in that** the pairing key is generated by the user unit or the security module, or by both of them.

7. A method according to any of the previous Claims, **characterized in that** the user unit is a mobile phone and the security module is a SIM card.
